# EUROPÄISCHE PATENTSCHRIFT

(11) **EP 1 095 321 B1**
(45) Veröffentlichungstag und Bekanntmachung des Hinweises auf die Patenterteilung: **04.06.2003**
(21) Anmeldenummer: 99942734.7
(22) Anmeldetag: 01.07.1999
(51) Int. Cl.: G05B 19/418, G05B 19/042

(54) **VERFAHREN UND ANORDNUNG ZUM ENTWURF EINER STEUERUNG FÜR EINEN GESAMTPROZESS**
METHOD AND DEVICE FOR DESIGNING THE CONTROL OF AN OVERALL PROCESS
PROCEDE ET DISPOSITIF POUR ETABLIR UN PROJET DE COMMANDE POUR UN PROCESSUS ENTIER

(30) Priorität: 03.07.1998 DE 19829804
(43) Veröffentlichungstag der Anmeldung: 02.05.2001
(73) Patentinhaber: SIEMENS AKTIENGESELLSCHAFT, 80333 München (DE)
(72) Erfinder: BRANDIN, Bertil, D-80469 München (DE); KALTENBACH, Markus, D-80801 München (DE)
(86) Internationale Anmeldenummer: DE9901915
(87) Internationale Veröffentlichungsnummer: WO00002107

(56) Entgegenhaltungen:
- DE-A- 19 639 424
- US-A- 5 212 881
- DESPANG H G ET AL: "RECHNERGESTUETZTER ENTWURF VON AUTOMATISIERUNGSANLAGEN UNTER NUTZUNG VON PETRI-NETZEN AM BEISPIEL EINER PAKETVERTEILANLAGE. \CAD OF CONTROL SYSTEMS USING PETRI NETS FOR THE EXAMPLE OF A PARCEL DISTRIBUTOR IN A POST OFFICE" AUTOMATISIERUNGSTECHNIK - AT,DE,OLDENBOURG VERLAG. MUNCHEN, Bd. 41, Nr. 8, Seite 307-316 XP000393035 ISSN: 0178-2312
- FRIEDRICH A: "NETZ DER NETZE WIE SPS-ORIENTIERTE PETRINETZE DIE TRANSPARENZ VON PROZESSEN ERHOEHEN KOENNEN" ELEKTROTECHNIK,DE,VOGEL VERLAG K.G. WURZBURG, Bd. 76, Nr. 4, Seite 44-47 XP000447796 ISSN: 1431-9578
- JÖRG SCHNEIDER: "FEHLERREAKTION MIT SPEICHERPROGRAMMIERBAREN STEUERUNGEN-EIN BEITRAG ZUR FEHLERTOLERANZ" 1994 , SPRINGER-VERLAG XP002126582 99 Seite 103, rechte Spalte, Absatz 1 -Seite 108, linke Spalte, letzter Absatz
- FLECKENSTEIN J.: "ZUSTANDSGRAPHEN FÜR SPS-GRAPHIKUNTERSTÜTZENDE PROGRAMMIERUNG UND STEUERUNGSABHÄNGIGE DARSTELLUNG" 1997 , SPRINGER-VERLAG XP002126583 63 Seite 34, Absatz 3 -Seite 41, letzter Absatz

## Beschreibung

Die Erfindung betrifft ein Verfahren und eine Anordnung zum Entwurf einer Steuerung für einen Gesamtprozeß, der mehrere Einzelprozesse umfaßt.

Die Steuerung einer komplexen technischen Anlagen bzw. eines Systems (Gesamtprozeß) umfaßt mehrere kleinere Steuerungseinheiten, die für bestimmte Teile (Einzelprozesse) der Anlage bzw. des Systems vorgesehen sind. Eine erste Steuerungseinheit für einen ersten Einzelprozeß ist dabei auf diesen Einzelprozeß beschränkt. Gleiches gilt für eine zweite Steuerung für einen zweiten Einzelprozeß. Auch wenn ein Zusammenspiel der ersten mit der zweiten Steuerung weitgehend fehlerfrei funktioniert, so ist nicht gewährleistet, daß bei geringfügiger Modifikation des ersten oder des zweiten Einzelprozesses noch eine fehlerfreie Funktion der gesamten Anlage gewährleistet ist. So kann eine kleine Änderung an einem Prozeß oder ein Hinzufügen eines dritten Prozesses zu nur empirisch nachweisbaren Konflikten und Blockierungen zwischen den Prozessen führen. Dabei ist es möglich, daß ein fehlerhafter Zustand des Gesamtprozesses einen empirischen Test überwindet und somit unerkannt bleibt. Dies ist gerade im Hinblick auf eine sicherheitskritische Anlage nicht akzeptabel, da in jedem Fall gewährleistet sein muß, daß kein unvorhergesehenes Ereignis im Zusammenspiel der Prozesse auftritt.

Neben den zu vermeidenden unerlaubten Zustände gibt es beim Ablauf eines Prozesses sogenannte erlaubte Zustände, die - bei ordnungsgemäßer Funktion - für den Prozeß ausschließlich auftreten sollen.

Aus Despang H. et al., "Rechnergestützter Entwurf von Automatisierungsanlagen unter Nutzung von Petri-Netzen am Beispiel einer Paketverteilanlage. \CAD of Control Systems Using Petri Nets for the Example of a Parcel Distributor in a Post Office", Automatisierungstechnik - AT, DE, Oldenbourg Verlag München, Bd. 41, Nr. 8, Seiten 307-316, XP000393035 ISSN: 0178-2312 ist ein rechnergestützter Entwurf von Automatisierungsanlagen unter Nutzung von Petri-Netzen bekannt, wobei dies anhand einer Paketverteilungsanlage erläutert wird.

Aus Friedrich A., "Netz der Netze wie SPS-orientierte Petrinetze die Transparenz von Prozessen erhöhen können", Elektrotechnik, DE, Vogel Verlag KG Würzburg, Bd. 76, Nr. 4, Seiten 44-47, XP000447796 ISSN: 1431-9578 ist die Erhöhung der Transparenz von Prozessen mit Hilfe SPS-orientierter Petrinetze bekannt, wobei auf die Möglichkeiten und den sich daraus ergebenden Nutzen einer übersichtlichen Petrinetz-Darstellung eingegangen wird.

Schließlich ist aus der deutschen Offenlegungsschrift DE-A-196 39 424 von Siemens ein Entwurfsverfahren für die Anlagentechnik und ein rechnergestütztes Projektierungssystem zur Verwendung bei diesem Verfahren bekannt, wobei hierbei eine formale Anlayse und eine simulative Validierung eingesetzt wird und die Simulation anhand einer grafischen Unterstützung erfolgt und wobei aus der validierten Spezifikation automatisch ein Code für die Automatisierungssysteme erzeugt wird.

Die **Aufgabe** der Erfindung besteht darin, ein Verfahren und eine Anordnung zum Entwurf einer Steuerung für einen Gesamtprozeß anzugeben, wobei (formal) sichergestellt wird, daß keine Behinderung der Einzelprozesse auftritt und nur erlaubte Zustände belegt werden.

Diese Aufgabe wird gemäß den Merkmalen der unabhängigen Patentansprüche gelöst.

Im Rahmen der Erfindung wird ein Verfahren zum Entwurf einer Steuerung für einen Gesamtprozeß, der mehrere Einzelprozesse umfaßt, angegeben. Bei dem Verfahren werden Funktionalitäten der Einzelprozesse identifiziert, wobei die Funktionalitäten Programmeinheiten mit auch von anderen Einzelprozessen genutzten Schnittstellen und/oder Funktionsaufrufen und/oder Methodenaufrufen darstellen. Weiterhin wird eine Validierung der Steuerung für den Gesamtprozeß durchgeführt, indem ein Zusammenspiel der Funktionalitäten gemäß einer Vorgabe für den Gesamtprozeß automatisch dahingehend verifiziert wird, daß jeder Einzelprozeß während des Ablaufs nicht gestört wird. Aus dem Ergebnis der Validierung werden Daten für die Steuerung des Gesamtprozesses ermittelt.

Ein Vorteil des Verfahrens besteht darin, daß in dem Schritt der Validierung sichergestellt wird, daß jeder Einzelprozeß ungestört ablaufen kann. Ein weiterer Vorteil besteht in der automatischen Generierung von Daten für die Steuerung des Gesamtprozesses. Somit werden mit Hilfe des Verfahrens systematisch Daten für die Steuerung des Gesamtprozesses erstellt.

Eine Ausgestaltung besteht darin, daß nach der Validierung eine Ablaufoptimierung durchgeführt wird. So ist es sicherlich ein Vorteil, daß Einzelprozesse störungsfrei ablaufen können, ein anderer Vorteil besteht darin, daß die mehreren Einzelprozesse möglichst zeitoptimiert ablaufen. Ziel der Ablaufoptimierung ist es, die Durchführung vorgegebener Aktionen der mehreren Einzelprozesse parallel und in möglichst kurzer Zeit ohne Störungen vorzunehmen.

Eine Weiterbildung besteht darin, daß die Daten für die Steuerung des Gesamtprozesses in Form eines ablauffähigen Codes bestimmt werden. Hiermit ist sichergestellt, daß das Ergebnis der Validierung und gegebenenfalls der Ablaufoptimierung vollständig automatisch in die Steuerung des Gesamtprozesses einfließt. Es wird beispielsweise ein in der Programmiersprache C oder der Programmiersprache C++ abgefaßter Programmcode generiert, der die Steuerung des Gesamtprozesses veranlaßt bzw. sicherstellt.

Insbesondere kommt der Vorteil bei der Generierung von ablauffähigem Code zum Tragen, wenn auch Funktionalitäten der Einzelprozesse in Form jeweiliger Programmeinheiten bereitgestellt werden. Entsprechen mehrere Funktionalitäten mehrerer Einzelprozesse jeweils mindestens einer Programmeinheit; so dienen die Daten zur Steuerung, die in Form ablauffähigen Codes generiert wurden, der Koordination der einzelnen Programmeinheiten, bzw. verwendet der ablauffähige Code die von den Programmeinheiten bereitgestellten Schnittstellen, z.B. Funktionsaufrufe oder Methodenaufrufe.

Auch ist es eine Weiterbildung, daß ein Einzelprozeß gestört wird, falls eine der folgenden Bedingungen erfüllt ist:
a) Der Einzelprozeß wird durch einen anderen Einzelprozeß blockiert. Im Fall der Blockierung wollen zwei Einzelprozesse eine physikalische Ressource in unterschiedlicher Weise nutzen. In so einem Fall kommt es zur Blockierung, da die Ressource nicht beiden Einzelprozessen gleichzeitig entsprechen kann.
b) Der Einzelprozeß erreicht einen unerlaubten oder einen den Ablauf des Gesamtsystems gefährdenden Zustand. Es ist eine wesentliche Anforderung an eine sichertieitskritische Anwendung, daß keine gefährdenden Zustände eingenommen werden.

Auch wird im Rahmen der Erfindung eine Anordnung zur Steuerung eines Gesamtprozesses angegeben, welcher Gesamtprozeß mehrere Einzelprozesse umfaßt, wobei eine Prozessoreinheit vorgesehen ist, die derart eingerichtet ist, daß Funktionalitäten der Einzelprozesse identifizierbar sind. Ferner ist eine Validierung durchführbar, indem ein Zusammenspiel der Funktionalitäten gemäß einer Vorgabe für den Gesamtprozeß automatisch dahingehend verifiziert wird, daß jeder Einzelprozeß während des Ablaufs nicht behindert wird. Schließlich sind die Daten, die aus dem Ergebnis der Validierung resultieren, für die Steuerung des Gesamtprozesses einsetzbar.

Diese Anordnung ist insbesondere geeignet zur Durchführung des erfindungsgemäßen Verfahrens oder einer seiner vorstehend erläuterten Weiterbildungen.

Weiterbildungen der Erfindung ergeben-sich auch aus den abhängigen Ansprüchen.

Ausführungsbeispiele der Erfindung werden nachfolgend anhand der Zeichnung dargestellt und erläutert.

Es zeigen
- Fig. 1: einen Revolver-Kopf eines Bestückungsautomaten;
- Fig.2: Schritte eines Verfahrens zur Generierung einer Steuerung eines Gesamtprozesses;
- Fig. 3: einen Zustandautomaten, der das Systemverhalten der "scan"-Operation darstellt;
- Fig.4: einen Zustandsautomaten, der das spezifische Systemverhalten des Scan-Tests darstellt;
- Fig. 5: einen Zustandsautomaten, der eine sequentielle Abarbeitung des Vacuum-Tests und des Scan-Tests darstellt;
- Fig.6: zwei Zustandsautomaten, die eine parallele Abarbeitung des Vacuum-Tests und des Scan-Tests darstellen;
- Fig.7: mehrere Zustandsautomaten, die ein Systemverhalten darstellen;
- Fig. 8: einen Zustandsautomat, der ein spezifisches Systemverhalten darstellt;
- Fig.9: zwei Zustandsautomaten, die jeweils spezifisches Systemverhalten für den Vacuum-Test und den Scan-Test darstellen;
- Fig. 10: einen Zustandsautomat für den Gesamtprozeß.

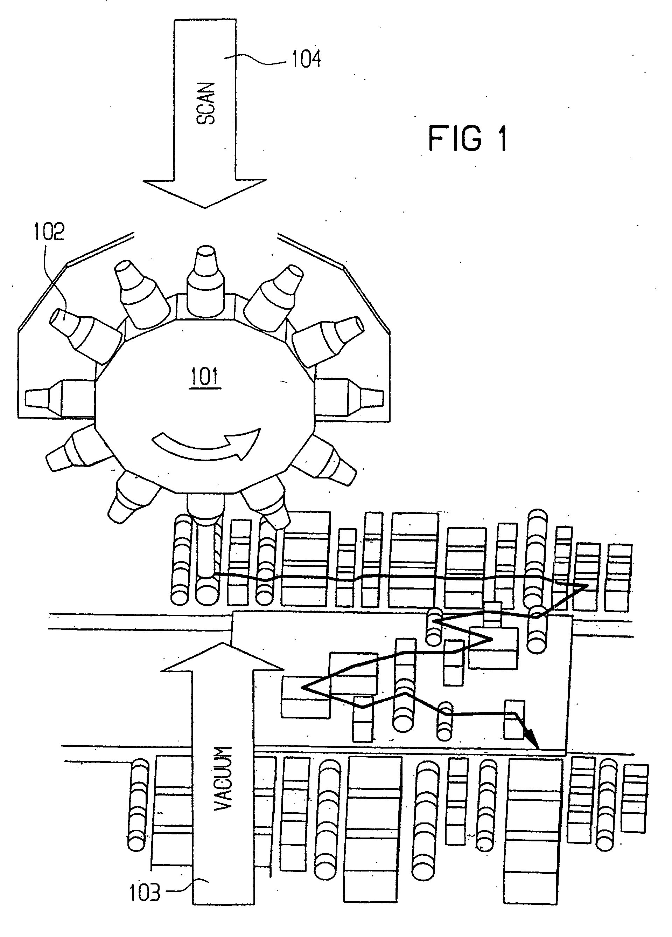

Figur 1 zeigt einen Revolverkopf 101 eines Bestückautomaten. Der Revolverköpf 101 nimmt Bauteile auf, und plaziert sie an einer vorgegebenen Zielposition. Der Revolverkopf enthält 12 Vakuumpipetten 102, die als Aufnahme und Plazierungswerkzeug dienen. Ist der Revolverkopf 101 über längere Zeit im Einsatz, so treten Verschleißerscheinungen auf, die Vakuumpipetten verschmutzen und nutzen sich ab. Demzufolge ist es notwendig, periodische Tests durchzuführen, um den Zustand der Vakuumpipetten 102 zu ermitteln und diese gegebenenfalls auszutauschen. Zwei verschiedene Tests werden von zwei unterschiedlichen C-Programmen durchgeführt. Ein Vakuumtest 103 dient zur Feststellung, ob die jeweilige Vakuumpipette 102 noch den vorgesehenen Unterdruck erzeugen kann, ein Scan-Test 104 zeigt auf inwieweit die einzelne Vakuumpipette 102 physikalischen Verschleißerscheinungen unterliegt und ob sie ausgetauscht werden muß. Für die nachfolgenden Betrachtungen greifen der Scan-Test 104 und der Vakuum-Test 103 auf ein und dieselbe Ressource zu: Das Drehen des Revolverkopfes 101.

Nachfolgend wird dargelegt, wie eine Steuerung eines Gesamtprozesses bestimmt wird, wobei Konfliktfreiheit garantiert wird und eine zeitgleiche Ausführung von Vakuum-Test 103 und Scan-Test 104 möglich ist, ohne daß der .Gesamtprozeß unvorhergesehene Zustände einnehmen kann. Dazu sind die Funktionsaufrufe der obengenannten C-Programme zu koordinieren.

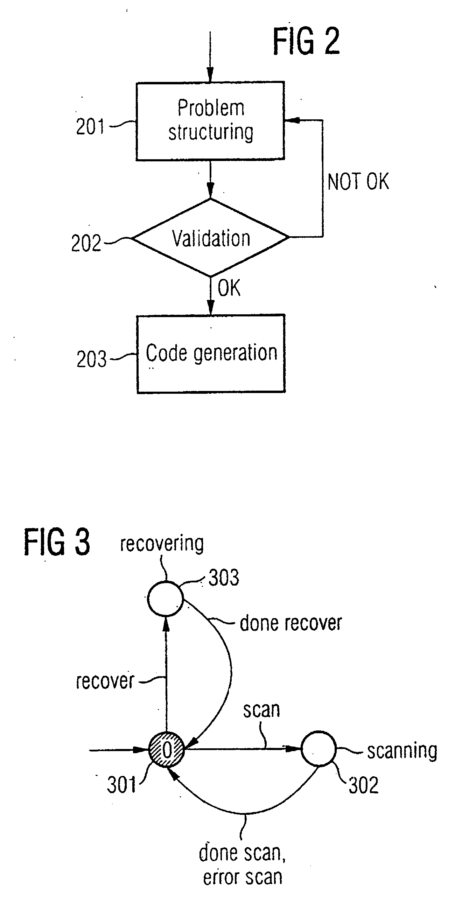

Figur 2 zeigt Schritte eines Verfahrens zur Generierung einer Steuerung eines Gesamtprozesses.

In einem Schritt 201 werden Funktionalitäten der Einzelprozesse identifiziert (Strukturierung). Weiterhin werden kontrollierbare und unkontrollierbare Ereignisse identifiziert. Kontrollierbare Ereignisse sind Ereignisse, die durch die Steuerung vermieden werden können. Unkontrollierbare Ereignisse sind Ereignisse, die nicht vermieden werden können, z.B. Ausgangswerte von Sensoren oder Ergebnisse von Aktionen. Ferner werden Sequenzen von Ereignissen identifiziert, die ein mögliches physikalisches Systemverhalten darstellen. Auch werden Sequenzen von Ereignissen identifiziert, die ein spezifisches Systemverhalten (aufgabenbezogenes Systemverhalteh) unter dem Einfluß der Steuerung darstellen.

Der Schritt der Strukturierung 201 umfaßt ferner die Darstellung eines Zustandsautomaten, wie in Figur 3 für das "Scan-Verhalten" dargestellt ist.

Von einem Initialzustand 301 aus überführt ein "scan"-Kommando den Automaten in einen Zustand 302, in dem die Vakuumpipette 102 auf Verschleiß untersucht wird. Ist das "Scannen" abgeschlossen, so wird in den Zustand 301 zurückgekehrt. Ebenso wird bei Auftreten eines Fehlers von dem Zustand 302 in den Zustand 301 zurückgekehrt (Fehler: Vorgang des Scannens zeigt an, daß die Vakuumpipette 102 ausgewechselt werden muß). Ein "Recover"-Kommando überführt den Zustand 301 in einen Zustand 303, in dem zu Startbedingungen zurückgekehrt wird (Recovering). Ist der Vorgang "Recovering" beendet, so wird in den Zustand 301 ("done recover") zurückgesprungen.

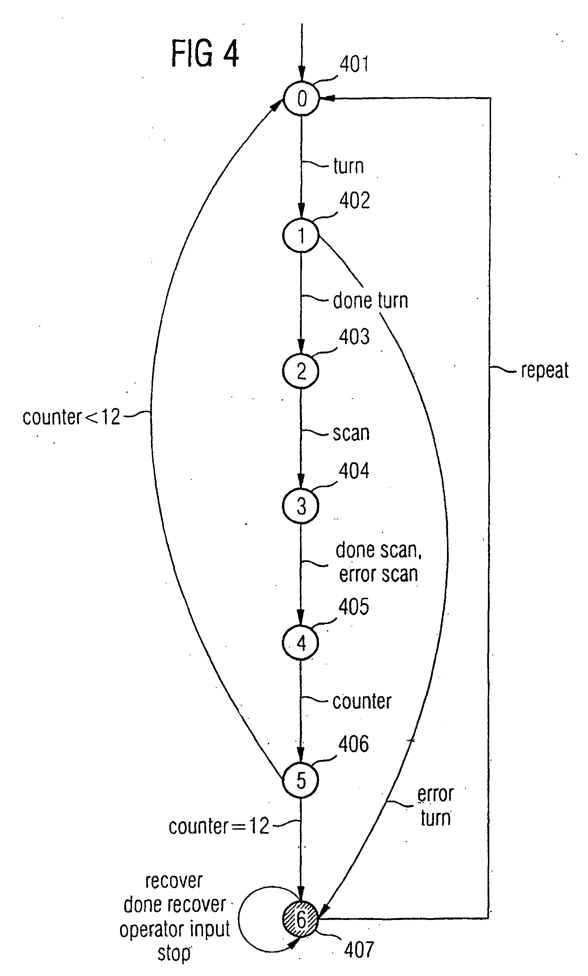

Auch das spezifische Systemverhalten wird in Form eines Automaten dargestellt.. In Figur 4 ist hierzu ein Automat dargestellt, der dem spezifischen Systemverhalten für die Koordination der Ereignisse "turn", "done turn", "error turn", "scan", "done scan", "error scan", "counter" entspricht.

Figur 4 zeigt einen Zustandsautomaten, der das spezifische Systemverhalten des Scan-Tests 104 darstellt. Ein Initialzustand 401 wird durch ein "Turn"-Kommando in einen Zustand 402 überführt. Ist die Drehung des Revolverkopfes 101 beendet, so erfolgt ein Übergang von Zustand 402 in einen Zustand 403. Tritt bei der Drehung ein Fehler auf ("error turn"), so geht der Zustand 402 in einen Zustand 407 über. Von dem Zustand 403 wird durch das "scan "-Kommando ein Übergang in einen Zustand 404 angestoßen, bei abgeschlossenem Scan-Test 104 erfolgt ein Übergang von dem Zustand 404 in einen Zustand 405. Die Erhöhung eines Zählers (counter) überführt den Zustand 405 in einen Zustand 406. Nun wird überprüft, ob der Zähler einen Wert 12 bereits erreicht hat. Ist dies der Fall, so wird der Zustand 406 in den Zustand 407 überführt, weist der Zähler einen kleineren Wert als 12 auf, so geht der Zustand 406 in den Zustand 401 über. Verschiedene Kommandos stellen sicher, daß der Zustand 407 beibehalten wird: "recover", "done recover", "operator input", "stop". Ein "repeat"-Kommando veranlaßt eine Wiederholung des Vorgangs, indem der Zustand 407 in den Zustand 401 übergeführt wird.

Ein nächster Schritt 202 in Figur 2 stellt eine Validierung der Steuerung des Gesamtprozesses sicher, indem automatisch Eigenschaften des Gesamtprozesses verifiziert werden. Solche Eigenschaften sind insbesondere eine Blockierungs- bzw. Nichtblockierungseigenschaft und eine Kontrollierbarkeitseigenschaft. Arbeiten verschiedene Einzelprozesse parallel nebeneinander und teilen diese Einzelprozesse sich eine oder mehrere Ressourcen (hier das Drehen des Revolverkopfes 101), so ist Blockierungsfreiheit gewährleistet, falls die Einzelprozesse ihre Aufgaben bis zu Ende durchführen können, ohne sich gegenseitig durch den Zugriff auf gemeinsame Ressourcen zu behindern. In dem dargestellten Ausführungsbeispiel benutzen der Einzelprozeß Scan-Test 104 und der Einzelprozeß Vakuum-Test 103 gemeinsam die Ressource "Drehen des Revolverkopfs 101". Dies könnte zu einer gegenseitigen Blockierung führen, falls die Steuerung des Gesamtprozesses dieses nicht präventiv verhindert.

Weiterhin erfolgt die Validierung 202, indem eine Plausibilitätsüberprüfung der Strukturierung 201 des zu steuernden Gesamtprozesses durch Beobachtung oder Simulation des Systems und des spezifischen Systemverhaltens in Form eines Zustandsautomaten erfolgt. Schließlich wird automatisch die Verifikation vorgegebener Eigenschaften durchgeführt. Eine dieser Eigenschaften ist
"nachdem ein Fehler im Scan-Test 104 aufgetreten ist (das Ereignis "error scan" wurde angezeigt) setzt stets die "recovery"-Operation (das Ereignis "recover") ein".

Die Validierung 202 führt, falls diese nicht vollständig erfolgt und die den ungestörten Ablauf der Einzelprozessen formal verifiziert, wiederholt, indem zu dem Schritt 201, der Strukturierung der Funktionalitäten der Einzelprozesse, zurückverzweigt wird. Ist die Validierung 202 erfolgreich, so wird automatisch Code für die Steuerung des Gesamtprozesses generiert (vgl. Übergang zu Schritt 203 in Figur 2).

Dabei werden bei der automatischen Generierung der Steuerung . des Gesamtprozesses insbesondere kontrollierbare Ereignisse den verknüpften Funktionsaufrufen innerhalb der Einzeiprozesse und damit den zugehörigen Programmcode-Fragmenten zugeordnet. Die Zuordnung von unkontrollierbaren Ereignissen werden entsprechenden Rückgabewerten von Funktionsaufrufen oder Ausgabewerten von Sensoren zugeordnet. Ein Beispiel stellt der Funktionsaufruf des Ereignisses "scan" dar, der sich auf die entsprechende Programmcode-Fragment (C-Programm Routine "Scan-Test-") bezieht, die als Rückgabewerte "scan error" oder "scan done" umfaßt.

Die automatische Generierung des C-Codes für die Steuerung des Gesamtprozesses wird aus verschiedenen Zustandsautomaten, Zuordnungen und/oder Programmcode-Fragmenten ermittelt. Die einzelnen im Schritt 201 strukturierten Funktionalitäten entsprechen dabei den entsprechenden Zustandsautomaten bzw. Programmcode-Fragmenten.

Wie bereits erwähnt, erfolgt eine parallelisierte Durchführung des Vakuum-Tests 103 und des Scan-Tests 104, wobei jeder Test an verschiedenen physikalischen Orten ausgeführt wird (vgl. Figur 1 gegenüberliegende Durchführung der beiden Tests).

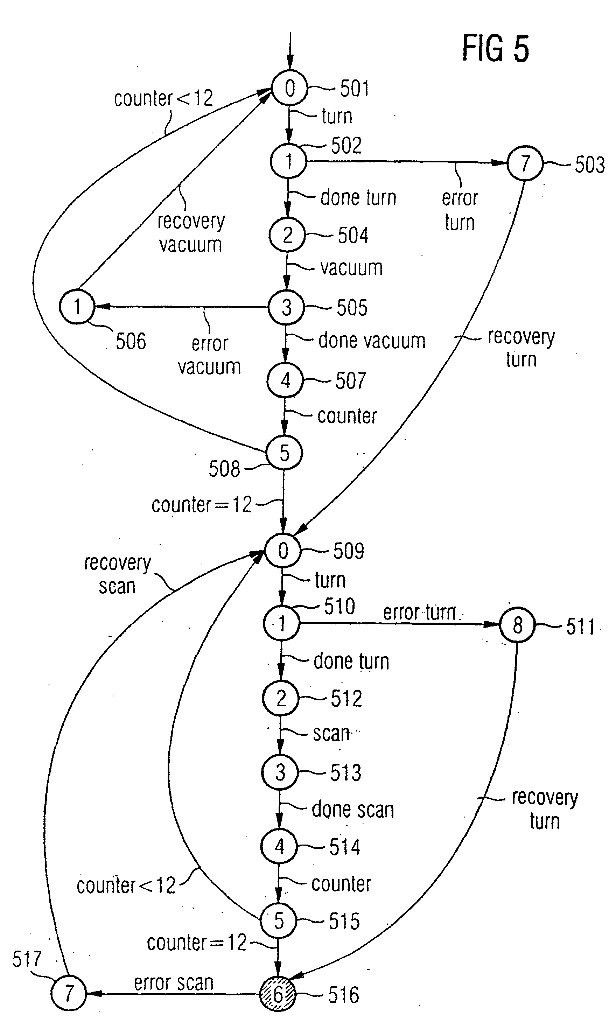

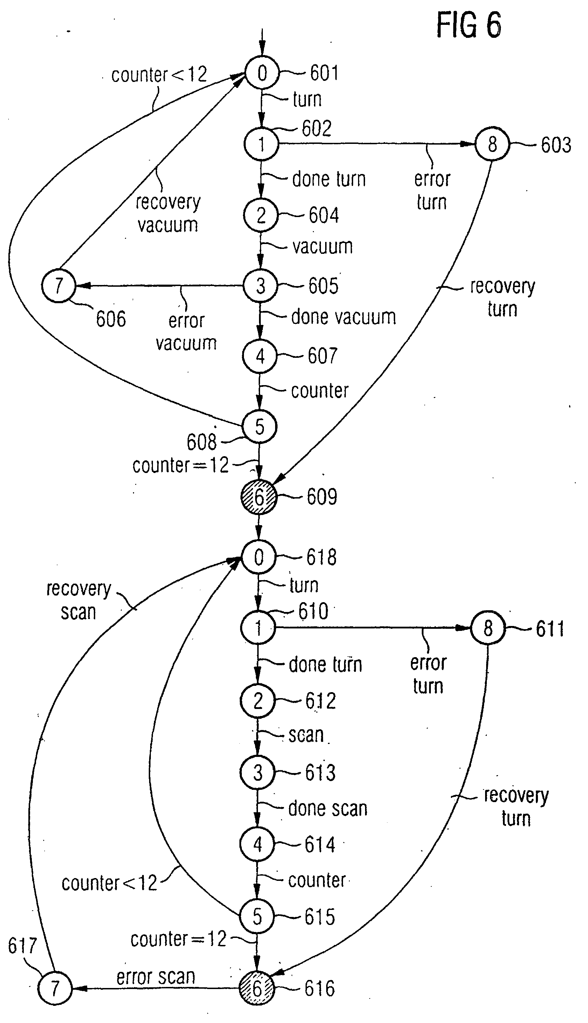

Figur 5 und Figur 6 zeigen das gewünschte Verhalten der Einzelprozesse für den Vakuum-Test 103 und den Scann-Test 104, wobei in Figur 5 eine sequentielle Abarbeitung beider Tests und in Figur 6 eine parallele Abarbeitung beider Tests dargestellt ist. Bei der parallelen Abarbeitung in Figur 6 kann eine Blockierung der beiden Einzelprozesse dadurch eintreten, daß nach dem Ereignis "recovery vacuum" eines der beiden Ereignisse "turn" oder '"counter" nicht eintreten wird. Dadurch ist ein von beiden parallel ablaufenden Einzelprozessen benötigtes Drehen ("turn"-Kommando) des Zylinderkopfes nicht gewährleistet. Während der eine Automat den Zylinderkopf drehen will, will der andere Automat den Zähler hochsetzen, es kommt demnach zu einer Blockierung. Eine sequentielle Abarbeitung, wie in Figur 5 gezeigt, ist hingegen möglich, wobei hintereinander die Tests für je 12 Vakuumpipetten 102 durchgeführt werden und somit der-Zylinderkopf 101 zweimal vollständig gedreht werden muß. Der Zeitaufwand für die sequentielle Abarbeitung ist ungleich größer als für eine (nahezu) parallele Abarbeitung.

In Anlehnung an Figur 4 sind Figur 5 bis Figur 10 analog aus sich heraus verständlich. So umfaßt die Figur 5 die Zustände 501 bis 517, Figur 6 die Zustände 601 bis 618, wobei die Zustände 501 bis 509 und 509 bis 517 die jeweils eigenständigen, parallel ablaufbaren Automaten gemäß Figur 6, kennzeichnen. Das Ereignis, das jeweils ausschlaggebend für den Übergang eines Zustandes in einen anderen ist, ist in den Figuren jeweils entlang der Übergangspfeile angezeigt.

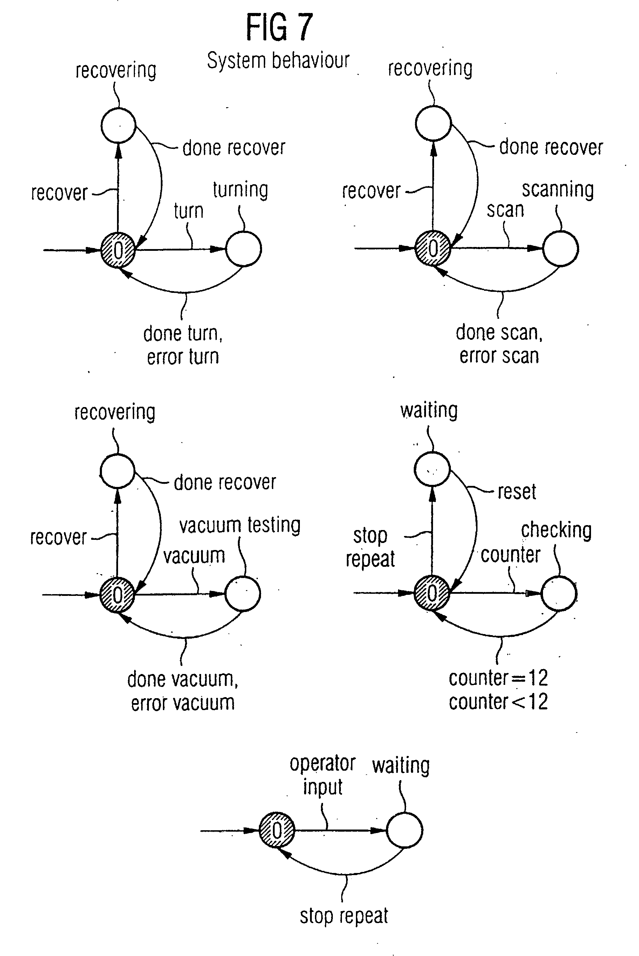

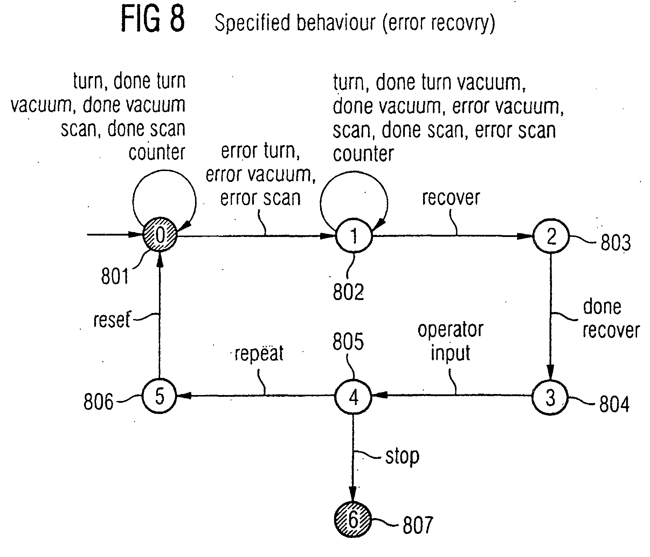

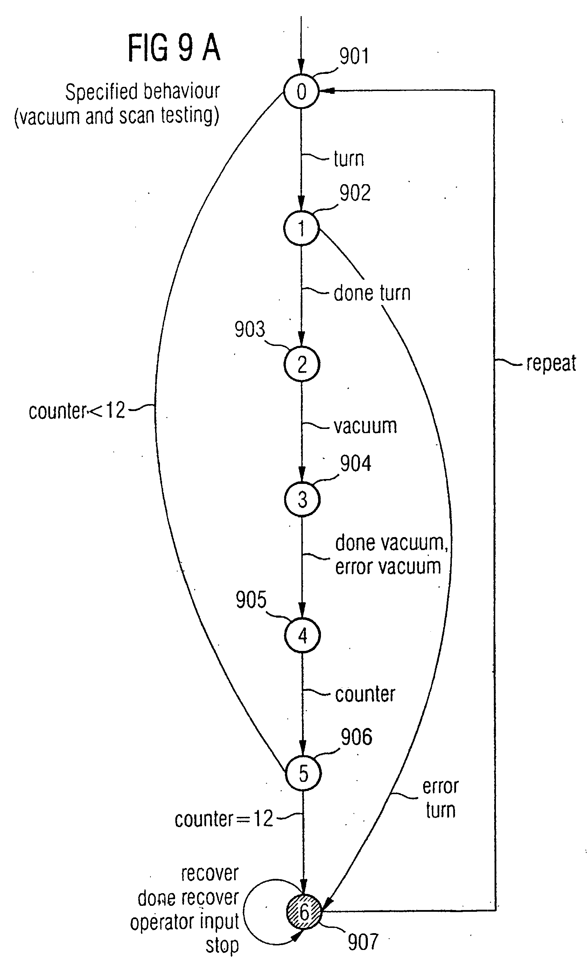

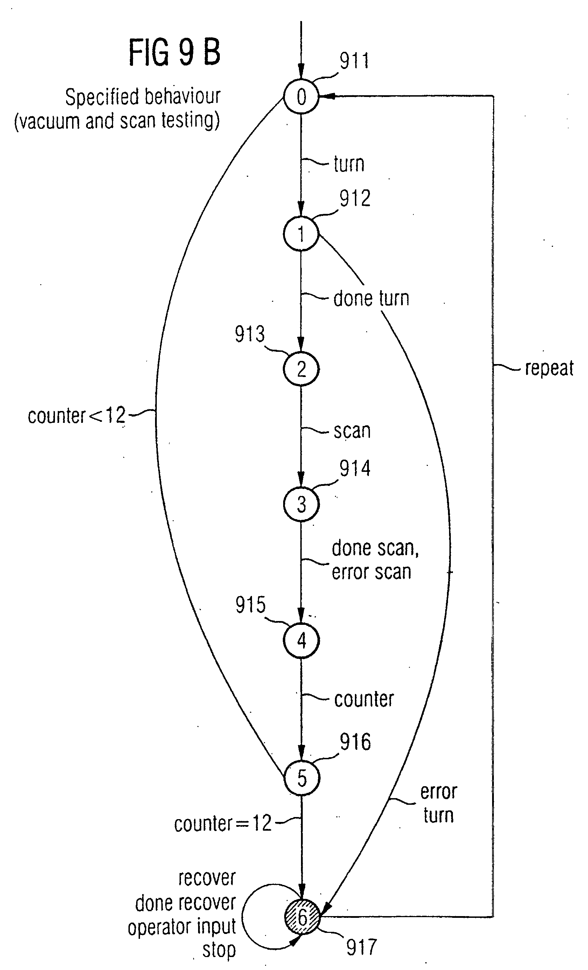

Ereignisse mit gleichem Namen treten in Automaten, in denen das jeweilige Ereignis definiert ist, synchron auf. Im vorliegenden.Ausführungsbeispiel tritt das Ereignis "Scan" auf, falls der Zustandsautomat des Systemverhaltens (vgl. Figur 7) sich im Zustand "0" befindet, bzw. sich der Zustandsautomat des spezifischen Systemverhaltens gemäß Figur 8 in dem Zustand 0 oder im Zustand 1 befindet und falls der Zustandsautomat des spezifischen Systemverhaltens gemäß Figur 9 sich im Zustand 2 befindet.

Kontrollierbare Ereignisse sind:
"turn", "scan", "vacuum", "recover", "recovery turn", "recovery "scan", "recovery vacuum", "counter", "operator input", "reset".

Unkontrollierbare Ereignisse sind:
"done turn", "error turn", "done scan", "error scan", "done vacuum", "error vacuum", "done recover", "counter=12?", "counter<12?", "stop", "repeat".

Der jeweilige Zustandsautomat zeigt an, in welchem Zustand das korrespondierende Systemverhalten beendet sein kann, d.h. der Zustand, der schwarz hinterlegt ist, definiert eine Terminierungsbedingung.

Figur 7 zeigt das Systemverhalten an. Wie oben bereits erwähnt, zeigt das Systemverhalten Sequenzen von Ereignissen, die physikalisch mögliche Systemzustände repräsentieren. Derartige physikalisch mögliche Verhalten sind das Drehen des Zylinderkopfes, das Durchführen des Vakuum-Tests, das Durchführen des Scann-Tests, das Erhöhen und Abfragen des Zählers und die Eingabe eines Kommandos, das eine vorgegebene Aktion auslöst. Der Zustand 0 in Figur 7 kennzeichnet sowohl den Initial- als auch den Endzustand des jeweiligen Systemverhaltens.

Nach der Identifikation des Systemverhaltens wird das spezifische Systemverhalten ermittelt, das sich auf ein Verhalten des Gesamtprozesses im Hinblick auf die zu steuernde Aufgabe bezieht. Für das spezifische Systemverhalten der Fehlerbehandlung ("error recovery") ist der zugehörige Zustandsautomat in Figur 8 dargestellt. In Figur 8 gibt es zwei markierte Zustände 801 und 807, wobei der Zustand 801 gleichzeitig Anfangs- und ein Endzustand des Zustandsautomaten ist. In den Zuständen 801 und 807 kann jeweils das spezifische Systenverhaiten "Fehlerbehandlung" beendet werden.

Gemäß den obigen Ausführungen, erfolgt nun die Validierung. Dazu sind gemäß Figur 2 (vgl. Übergang von Validierung 202 zur Strükturierung 201: Iteration) mehrere Durchgänge gezeigt, die schließlich zu der Lösung gemäß Figur 7 bis Figur 9 führen.

Die Figuren 8 und 9 zeigen das gesteuerte spezifische Systemverhalten entsprechend der vorgegebenen Funktionalität des Gesamtprozesses. Dazu sind drei Aufgaben identifiziert worden, die parallel ausgeführt werden: Fehlerbehandlung, Scann-Test und Vakuum-Test. Insbesondere die Fehlerbehandlun wird nur dann aktiviert, wenn sowohl der Scan-Test 104 als auch der Vakuum-Test 103 in einem markierten Zustand (vgl. Zustand 6 bzw. Zustände 907, 917 in Figur 9). Der Scan-Test 104 und der Vakuum-Test 103 werden nur aktiviert, falls die Fehlerbehandlung in dem Initialzustand (vgl. Zustand 0 bzw. 801 in Figur 8) ist.

Das Systemverhalten und das spezifische Systemverhalten gemäß den Figuren 7-9 sind blockierungsfrei. Weiterhin ist das spezifische Systemverhalten gemäß Figuren 8 und 9 kontrollierbar in Bezug auf das Systemverhalten aus Figur 7.

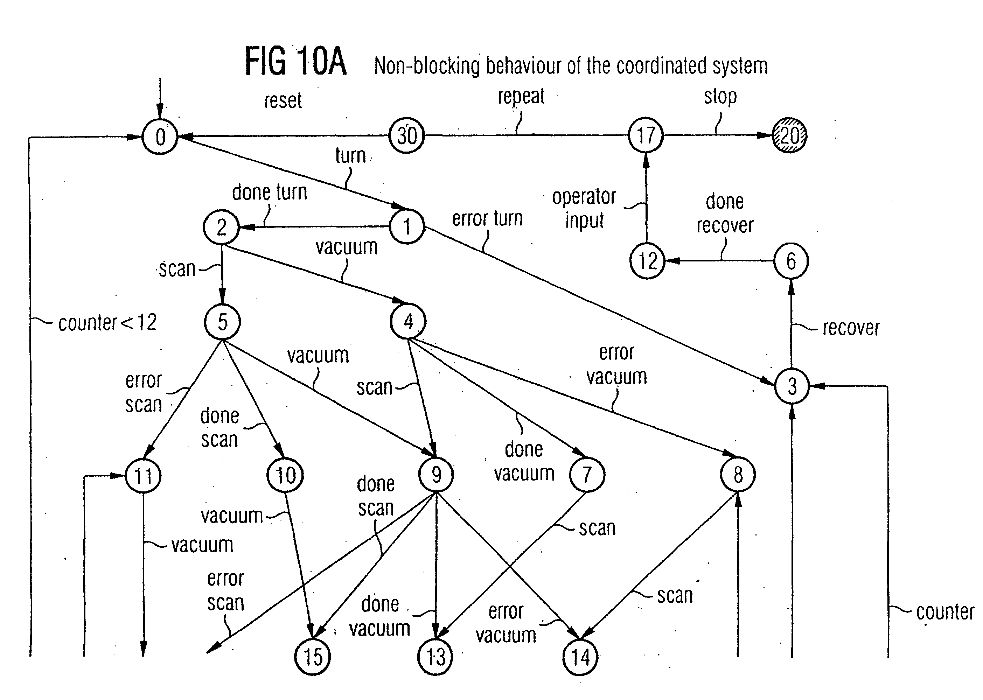

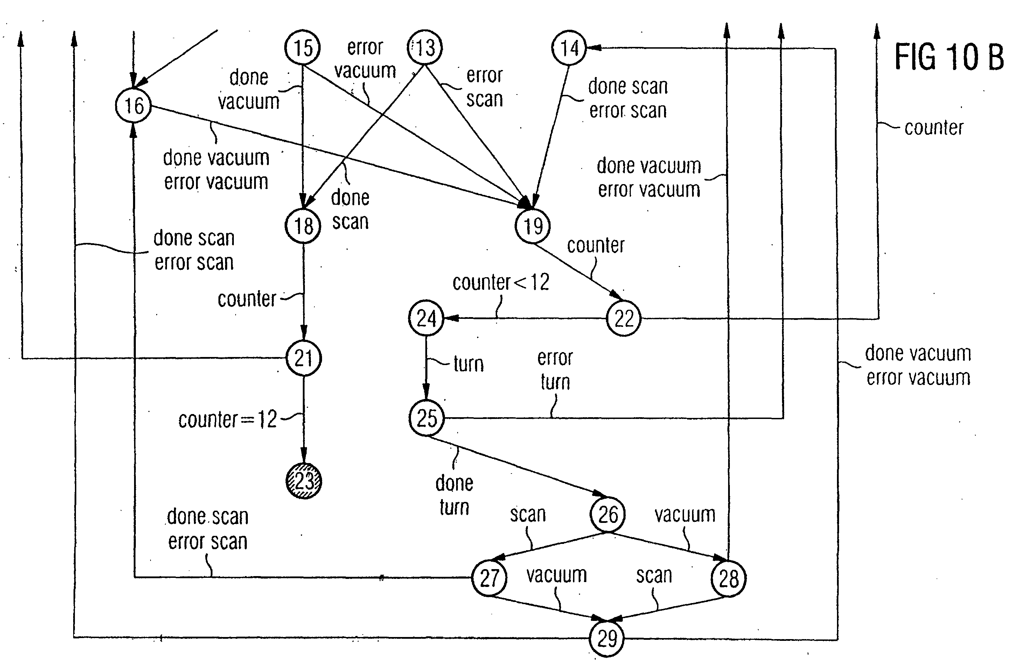

In Figur 10 wird der Gesamtprozeß aus den Automaten entsprechend den Figuren 7-9 zusammengesetzt. Figur 10 stellt den Produktautomaten der beschriebenen Automaten dar und ist aus sich heraus verständlich. Insbesondere wird der Produktautomat. gemäß Figur 10 nicht zur Strukturierung und Lösung der Steuerungsaufgabe für den Gesamtprozeß verwendet, da die übersichtliche Vorgehensweise, wie geschildert, einen strukturierten und überschaubaren Ansatz zur Bestimmung der Daten, die für die Steuerung des Gesamtprozesses notwendig sind, gewährleistet.

Eine automatische Generierung des ablauffähigen Programmcodes zur Steuerung des Gesamtprozesses wird durchgeführt, indem zuerst Funktionsaufrufe den kontrollierbaren. Ereignissen zugewiesen werden, wobei den Rückgabewerten der Funktiönsaufrufe oder Ausgabewerte von Sensoren den entsprechenden unkontrollierbaren Ereignissen zugewiesen werden. Der Programmcode für die Steuerung des Gesamtprozesses wird generiert aus den Automatenzuweisungen und zugehörigen Programmcode-Fragmenten.

## Patentansprüche

1. Verfahren zum Entwurf einer Steuerung für einen Gesamtprozeß, der mehrere Einzelprozesse umfaßt,
a) bei dem Funktionalitäten der Einzelprozesse identifiziert werden, wobei die Funktionalitäten Programmeinheiten mit auch von anderen Einzelprozessen genutzten Schnittstellen und/oder Funktionsaufrufen und/oder Methodenaufrufen darstellen,
b) bei dem eine Validierung der Steuerung für den Gesamtprozeß durchgeführt wird, indem ein Zusammenspiel der Funktionalitäten gemäß einer Vorgabe für den Gesamtprozeß automatisch dahingehend verifiziert wird, daß jeder Einzelprozeß während des Ablaufs nicht behindert wird,
c) bei dem aus einem Ergebnis der Validierung Daten für die Steuerung des Gesamtprozesses ermittelt werden.

2. Verfahren nach Anspruch 1,
bei dem zusätzlich zu Schritt 1c) eine Ablaufoptimierung durchgefürht wird.

3. Verfahren nach Anspruch 1 oder 2,
bei dem die Daten für die Steuerung in Form eines ablauffähigen Codes ermittelt werden.

4. Verfahren nach einem der Ansprüche 1 bis 3,
bei dem eine der Funktionalitäten der Einzelprozesse eine Softwareeinheit zur Steuerung des betroffenen Einzelprozesses ist.

5. Verfahren nach einem der vorhergehenden Ansprüche,
bei dem ein Einzelprozeß behindert wird, falls eine der folgenden Bedingungen erfüllt ist:
a) der Einzelprozeß wird durch einen anderen Einzelprozeß blockiert;
b) der Einzelprozeß erreicht einen unerlaubten oder einen den Ablauf des Gesamtsystems gefährdenden Zustand.

6. Verfahren nach einem der vorhergehenden Ansprüche,
bei dem eine Steuerung für Einzelprozesse eines Bestückautomaten entworfen wird.

7. Verfahren nach einem der vorhergehenden Ansprüche,
bei dem die für die Steuerung des Gesamtprozesses ermittelten Daten zur Steuerung einer technischen Anlage eingesetzt werden.

8. Anordnung zum Entwurf einer Steuerung für einen Gesamtprozeß, der mehrere Einzelprozesse umfaßt, mit einer Prozessoreinheit, die derart eingerichtet ist, daß
a) Funktionalitäten der Einzelprozesse identifizierbar sind wobei die Funktionalitäten Programmeinheiten mit auch von anderen Einzelprozessen genutzten Schnittstellen und/oder Funktionsaufrufen und/oder Methodenaufrufen darstellen;
b) eine Validierung, durchführbar ist, indem ein Zusammenspiel der Funktionalitäten gemäß einer Vorgabe für den Gesamtprozeß automatisch dahingehend verifiziert wird, daß jeder Einzelprozeß während des Ablaufs nicht behindert wird;
c) aus einem Ergebnis der Validierung Daten für die Steuerung des Gesamtprozesses einsetzbar sind.

## Claims

1. Method for designing the control of an overall process, which comprises a number of individual processes,
a) in which functionalities of the individual processes are identified, the functionalities representing program units with interfaces and/or function calls and/or method calls also used by other individual processes,
b) in which a validation of the control for the overall process is carried out, in that an interaction of the functionalities according to a specification for the overall process is automatically verified to the effect that each individual process during the sequence is not hindered,
c) in which data for the control of the overall process are determined from a result of the validation.

2. Method according to Claim 1, in which, in addition to step 1c), a sequence optimization is carried out.

3. Method according to Claim 1 or 2, in which the data for the control are determined in the form of an executable code.

4. Method according to one of Claims 1 to 3, in which one of the functionalities of the individual processes is a software unit for controlling the individual process concerned.

5. Method according to one of the preceding claims, in which an individual process is hindered if one of the following conditions is satisfied:
a) the individual process is blocked by another individual process;
b) the individual process reaches an allowed state or a state endangering the running of the overall system.

6. Method according to one of the preceding claims, in which the control for individual processes of an automatic component-mounting machine is designed.

7. Method according to one of the preceding claims, in which the data determined for the control of the overall process are used for controlling a technical installation.

8. Device for designing the control of an overall process which comprises a number of individual processes, with a processor unit which is set up in such a way that
a) functionalities of individual processes can be identified, the functionalities representing program units with interfaces and/or function calls and/or method calls also used by other individual processes;
b) a validation can be carried out, in that an interaction of the functionalities according to a specification for the overall process is automatically verified to the effect that each individual process during the sequence is not hindered;
c) from a result of the validation, data can be used for controlling the overall process.

## Revendications

1. Procédé pour établir un projet de commande pour un processus entier englobant plusieurs processus distincts, dans lequel
a) les fonctionnalités des processus distincts sont identifiées, lesdites fonctionnalités représentant des unités de programmes avec des interfaces et/ou des appels de fonctions et/ou des appels de méthodes également utilisés par d'autres processus distincts,
b) une validation de la commande pour le processus entier est exécutée par vérification automatique, pour le processus entier, d'une coopération des fonctionnalités selon une spécification par défaut, pour établir qu'aucun processus distinct ne sera perturbé pendant le déroulement,
c) sont déterminées, sur la base du résultat de la validation, des données pour la commande du processus entier.

2. Procédé selon la revendication 1, dans lequel une optimisation du déroulement est exécutée additionnellement à l'étape 1c).

3. Procédé selon la revendication 1 ou 2, dans lequel les données pour la commande sont déterminées sous la forme d'un code exécutable.

4. Procédé selon l'une des revendications 1 à 3, dans lequel l'une des fonctionnalités des processus distincts est une unité de logiciel pour la commande du processus distinct concerné.

5. Procédé selon l'une des revendications précédentes, dans lequel un processus distinct est empêché au cas où l'une des conditions suivantes est remplie:
a) le processus distinct est bloqué par un autre processus distinct;
b) le processus distinct atteint un état inadmissible ou un état qui compromet le déroulement du système entier.

6. Procédé selon l'une des revendications précédentes, dans lequel est établi un projet de commande pour des processus distincts d'un automate de placement.

7. Procédé selon l'une des revendications précédentes, dans lequel les données déterminées pour la commande du processus entier sont mises en oeuvre pour la commande d'une installation technique.

8. Dispositif pour établir un projet de commande pour un processus entier englobant plusieurs processus distincts et comprenant une unité de processeur configurée de manière telle que
a) les fonctionnalités des processus distincts sont identifiables, lesdites fonctionnalités représentant des unités de programmes avec des interfaces et/ou des appels de fonctions et/ou des appels de méthodes également utilisés par d'autres processus distincts,
b) une validation est exécutable par vérification automatique, pour le processus entier, d'une coopération des fonctionnalités selon une spécification par défaut, pour établir qu'aucun processus distinct ne sera perturbé pendant le déroulement,
c) peuvent être mises en oeuvre, sur la base du résultat de la validation, des données pour la commande du processus entier.
